# FASCICULE DE BREVET EUROPEEN

(11) **EP 3 717 792 B1**
(45) Date de publication et mention de la délivrance du brevet: **29.12.2021**
(21) Numéro de dépôt: 18867328.9
(22) Date de dépôt: 09.11.2018
(51) Int. Cl.: F16F 9/49, F16F 9/512, F16F 9/346, F16F 9/19, F16F 9/32

(54) **AMORTISSEUR HYDRAULIQUE AVEC BUTEE DE FIN DE COURSE AUTOREGLABLE SUIVANT LA CHARGE**
HYDRAULISCHER STOSSDÄMPFER MIT SELBSTEINSTELLBAREM LASTABHÄNGIGEM ENDANSCHLAG
HYDRAULIC SHOCK ABSORBER WITH END-OF-TRAVEL STOP THAT IS SELF-ADJUSTABLE ACCORDING TO THE LOAD

(30) Priorité: 29.11.2017 FR 1761333
(43) Date de publication de la demande: 07.10.2020
(73) Titulaire: PSA Automobiles SA, 78300 Poissy (FR)
(72) Inventeur: MONTEIL, Christophe, 91640 Briis Sous Forges (FR); BONTRON, Francis, 92190 Meudon (FR); RIGUEL, Frederic, 92300 Levallois Perret (FR)
(86) Numéro de dépôt international: PCT/FR2018/052782
(87) Numéro de publication internationale: WO 2019/106251

(56) Documents cités:
- BE-A- 359 981
- FR-A1- 3 050 000
- JP-A- 2000 227 135

## Description

La présente invention concerne un amortisseur hydraulique disposant d'une butée de fin de course, ainsi qu'un véhicule automobile équipé de ce type d'amortisseurs.

Les véhicules automobiles comportent généralement pour chaque roue une suspension comprenant un ressort de suspension, et un amortisseur télescopique hydraulique qui freine les mouvements de la suspension. En particulier l'amortisseur peut comporter une butée hydraulique de fin de course, qui arrête le mouvement en bout de course pour éviter un choc sur une butée rigide.

Un type de butée hydraulique connu pour un amortisseur de suspension de véhicule, présenté notamment par le document FR-A1-3050000, comporte une tige de vérin comprenant à son extrémité inférieure un piston principal, se prolongeant vers le bas par une chemise qui en fin de course de compression vient s'ajuster autour d'un tube intérieur de butée.

La chemise comporte une série de perçages répartis axialement, qui sont fermés les uns après les autres lors de l'introduction du tube dans cette chemise afin de freiner de plus en plus fortement le transfert de fluide qui a lieu de la chambre extérieure formée autour de cette chemise, vers la chambre en avant du piston à l'intérieur du tube et de la chemise. On obtient un freinage de plus en plus élevé de la fin de course de compression de l'amortisseur.

Un ressort de poussée disposé en dessous du piston principal, vient un peu avant la fin de course de l'amortisseur presser sur un boisseau coulissant axialement dans le tube de butée qui comporte des perçages additionnels à différentes hauteurs.

Une chambre de contrôle disposée dans le tube de butée en dessous du boisseau, comporte un passage limité de fluide vers l'extérieur afin de freiner le mouvement de descente de ce boisseau sous l'effet du ressort de poussée, et le mouvement de remontée de ce boisseau sous l'effet d'un ressort de rappel.

De cette manière un appui occasionnel du ressort de poussée sur le boisseau, lors d'un débattement important de la suspension réalisé de manière occasionnelle pour un véhicule peu chargé, ne descend pas le boisseau freiné par le fluide de la chambre de contrôle. Les perçages du tube de butée restent ouverts, donnant une grande souplesse à la butée de fin de course ce qui apporte un confort élevé.

Un appui fréquent du ressort de poussée sur le boisseau, avec un véhicule chargé entraînant cette fréquence, finit par descendre le boisseau qui ferme des perçages du tube de butée en durcissant plus fortement la butée de fin de course. On obtient une sécurité en évitant un talonnement de la suspension pour ce véhicule chargé.

Toutefois le boisseau comporte une unique chambre de contrôle, ce qui pose des problèmes de difficultés de réglage de la butée de fin de course avec le positionnement du boisseau, et des problèmes de réalimentation pouvant entraîner des cavitations.

La présente invention a notamment pour but d'éviter ces inconvénients de la technique antérieure.

Elle propose à cet effet un amortisseur hydraulique télescopique avec butée de fin de course, coulissant suivant un axe principal, comportant un piston d'amortissement avançant vers une direction avant lors d'un mouvement de compression de l'amortisseur, qui délimite en avant de ce piston d'amortissement une chambre d'amortissement, une chemise fixée en avant du piston d'amortissement, s'emboîtant sans jeu en fin de course autour d'un tube de butée en fermant des premiers perçages de la chemise ou du tube de butée, la butée comportant un boisseau coulissant axialement dans le tube de butée pour fermer des seconds perçages de ce tube de butée, et comportant un ressort de poussée disposé entre le piston d'amortissement et le boisseau, cet amortisseur étant remarquable en ce que le boisseau présente un alésage axial contenant un piston de boisseau délimitant en arrière une première chambre qui est séparée de la chambre d'amortissement, et en avant une deuxième chambre temporisant le mouvement du boisseau.

Un avantage de cet amortisseur est que les deux chambres disposées de chaque côté du piston de boisseau permettent en ajustant les entrées et les sorties de ces chambres, d'obtenir des grandes possibilités de réglages pour ajuster avec précision la dynamique du boisseau, et sa réponse aux oscillations qui modifie la courbe d'effort de freinage.

On peut en particulier l'appliquer pour un amortisseur de suspension de véhicule automobile, donnant des courbes de freinage assurant à la fois une grande souplesse pour un roulage à vide et une raideur importante pour un roulage sous forte charge.

L'amortisseur hydraulique selon l'invention peut comporter de plus une ou plusieurs des caractéristiques suivantes, qui peuvent être combinées entre elles.

Avantageusement, l'amortisseur comporte un ressort de rappel qui applique une force constante vers l'arrière sur le boisseau.

Avantageusement, le piston de boisseau comporte un perçage de limitation du passage de fluide.

Selon un mode de réalisation, le piston de boisseau est fixé sur une tige axiale qui traverse les deux chambres du boisseau.

Dans ce cas, aux extrémités axiales opposées des chambres du boisseau, la tige axiale peut traverser le boisseau par des guidages étanches.

Selon un autre mode de réalisation, le piston de boisseau est fixé à l'extrémité d'une tige axiale traversant la deuxième chambre.

Dans ce cas, avantageusement l'extrémité axiale arrière de la première chambre est séparée par un clapet de la chambre d'amortissement, réalisant une ouverture maximum pour un remplissage de cette première chambre.

De plus, le clapet peut comporter un perçage de limitation du passage de fluide.

Avantageusement, le ressort de poussée est engagé vers l'avant dans un creux axial du boisseau se prolongeant jusqu'à l'extrémité avant de la deuxième chambre.

L'invention a aussi pour objet un véhicule automobile équipé de suspensions comportant des amortisseurs comprenant l'une quelconque des caractéristiques précédentes.

L'invention sera mieux comprise et d'autres caractéristiques et avantages apparaîtront plus clairement à la lecture de la description ci-après donnée à titre d'exemple et de manière non limitative, en référence aux dessins annexés dans lesquels :
- les figures 1 et 2 sont des vues en coupe axiale d'une butée de fin de course d'un amortisseur hydraulique selon l'invention, présentées respectivement dans une position de début de la fin de course avec un faible freinage, et dans une position finale de la fin de course avec un fort freinage ; et
- les figures 3 et 4 sont des vues en coupe axiale d'une butée de fin de course suivant une variante, présentées respectivement dans une position de début de la fin de course avec un faible freinage, et dans une position de milieu de la fin de course avec un fort freinage.

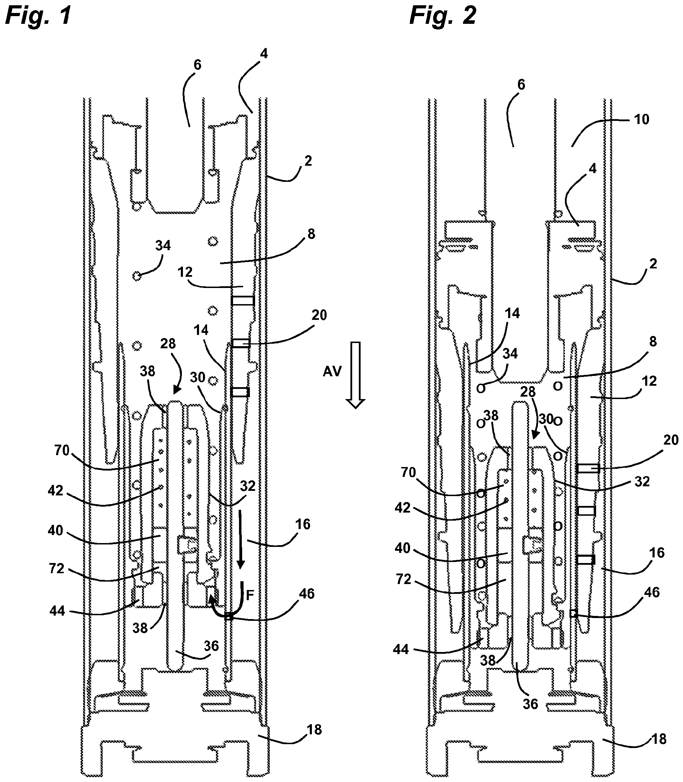

Les figures 1 et 2 présentent un amortisseur télescopique comportant un piston principal 4 avançant lors d'un mouvement de compression de l'amortisseur, vers une direction appelée par convention côté avant, indiquée par la flèche AV tournée vers le bas sur les figures.

Un corps extérieur cylindrique 2 formant un tube, contient le piston principal d'amortissement 4 fixé à l'extrémité inférieure avant d'une tige d'amortisseur 6, coulissant axialement dans ce corps avec une étanchéité pour délimiter une chambre avant d'amortissement 8 et une chambre arrière 10.

Une enveloppe tubulaire extérieure disposée autour du corps extérieur 2 pour protéger l'amortisseur, n'est pas représentée.

Le piston principal 4 comporte des passages réduits du fluide entre la chambre d'amortissement 8 et la chambre arrière 10, qui freinent son mouvement en fonction de la direction et de la vitesse du mouvement de la tige d'amortisseur 6.

Le piston principal 4 se prolonge vers l'avant par une chemise circulaire 12 qui s'emboîte en s'ajustant sans jeu vers la fin de course autour d'un tube de butée 14 dont la base est fixée à un couvercle d'extrémité 18, pour fermer une chambre extérieure annulaire 16 disposée autour de ce tube.

La chemise 12 comporte des perçages radiaux principaux 20 répartis axialement. En complément le tube de butée 14 peut aussi présenter des perçages radiaux principaux agissant de la même manière.

Lors de l'avance de la chemise 12 dans la chambre extérieure 16 autour du tube de butée 14, le fluide de cette chambre extérieure est refoulé vers la chambre d'amortissement 8 par les perçages principaux 20 de section calibrée, dont le nombre se réduit progressivement pour réaliser un freinage de plus en plus fort de la tige d'amortisseur 6.

Le fluide passe ensuite de la chambre d'amortissement 8 vers la chambre arrière 10 par les passages du piston principal 4.

Un boisseau 28 comporte une partie cylindrique extérieure 30 ajustée dans le tube de butée 14, et une partie cylindrique intérieure 32 disposée dans la partie extérieure sur une hauteur similaire, dont l'extrémité inférieure est fixée à la base de cette partie extérieure.

Un ressort hélicoïdal de poussée 34 présente une extrémité inférieure en appui sur le boisseau 28, qui est ajustée dans un creux axial entre la partie extérieure 30 et la partie intérieure 32, se prolongeant jusqu'à une deuxième chambre de temporisation 72. L'extrémité supérieure du ressort de poussée 34 est en appui sur le piston principal 4 quand celui-ci est suffisamment descendu dans l'amortisseur en arrivant près de la fin de course.

Le creux axial entre la partie extérieure 30 et la partie intérieure 32 permet au ressort de poussée 34 de descendre près de la base du boisseau 28, en formant un guidage de ce ressort, et en permettant son intégration en grande partie dans ce boisseau quand la tige d'amortisseur 6 est en fin de course, comme présenté figure 2.

La base du boisseau 28 comporte des perçages axiaux 44 permettant un passage libre du fluide des deux côtés de ce boisseau, en passant par le creux axial recevant le ressort de poussée 34.

Une tige traversante 36 dont la base est en appui sur le couvercle d'extrémité 18, traverse entièrement le boisseau 28 avec à chaque extrémité de ce boisseau un guidage axial étanche 38.

Un piston annulaire de boisseau 40 fixé sur la tige traversante 36, coulisse dans un alésage axial réalisé dans la partie intérieure 32 du boisseau 28, en séparant dans cet alésage une première chambre 70 disposée en arrière, de la deuxième chambre de temporisation 72 disposée en avant, avec un passage calibré freinant le transfert du fluide entre ces deux chambres.

Un ressort hélicoïdal de rappel 42 disposé dans la première chambre 70, prend appui à la fois sur le piston de boisseau 40 et sur le sommet de cette chambre afin d'appliquer une force constante de rappel vers le haut du boisseau 28.

Des perçages radiaux additionnels 46 disposés à la base du tube de butée 14, restent ouverts quand le boisseau 28 est dans sa position haute, et sont fermés quand ce boisseau descend comme présenté figure 2.

Le fonctionnement de la butée de fin de course est le suivant. Avec un véhicule peu chargé présenté figure 1, l'amortisseur arrive rarement près de sa fin de course de compression, et le ressort de poussée 34 appuie de manière occasionnelle sur le boisseau 28. Le boisseau 28 rappelé vers le haut par son ressort de rappel 42, étant freiné par le transfert de fluide de la première chambre 70 vers la deuxième chambre de temporisation 72, l'appui occasionnel du ressort de poussée 34 ne le descend pas.

Les perçages additionnels 46 sont ouverts, permettant un passage du fluide de la chambre extérieure 16 vers la chambre d'amortissement 8 en passant axialement au travers du boisseau 28 comme présenté par les flèches F. Ces perçages additionnels 46 disposés en parallèle des perçages principaux 20 de la chemise 12 donnent une certaine souplesse à la butée de fin de course, permettant de freiner avec un confort élevé les mouvements exceptionnels de grande amplitude d'un véhicule peu chargé.

Avec un véhicule fortement chargé présenté figure 2, le ressort de poussée 34 vient souvent en appui sur le boisseau 28 ce qui finit par provoquer une descente de ce boisseau avec un transfert du fluide de la première chambre 70 vers la deuxième chambre de temporisation 72.

Lors des remontées de la tige d'amortisseur 6, le boisseau 28 comporte une dynamique lente venant du calibrage du ressort de rappel 42 et des passages calibrés du piston de boisseau 40, ne permettant pas la montée de ce boisseau entre deux remontées de cette tige. Les perçages additionnels 46 restent fermés par la descente du boisseau 28.

Lors d'une descente en fin de course de la tige d'amortisseur 6, le passage du fluide de la chambre extérieure 16 vers la chambre d'amortissement 8 est permis uniquement par les perçages principaux 20 de la chemise 12, qui sont répartis axialement et calibrés pour obtenir un freinage progressif élevé. Les perçages additionnels 46 assouplissent ce freinage quand ils sont ouverts.

En complément on peut répartir axialement des perçages additionnels 46 sur la base du tube de butée 14, avec des diamètres variés afin d'obtenir une fermeture progressive de la section de passage lors de la descente du boisseau 28. On obtient à ce moment une efficacité progressive de la butée de fin de course suivant l'amplitude et la fréquence des débattements de l'amortisseur, pour répondre notamment à des véhicules moyennement chargés.

Après une décharge du véhicule, le ressort de poussée 34 n'agit plus sur le boisseau 28, sa dynamique lente lui permet une remontée progressive avec un transfert de fluide de la deuxième chambre de temporisation 72 vers la première chambre 70.

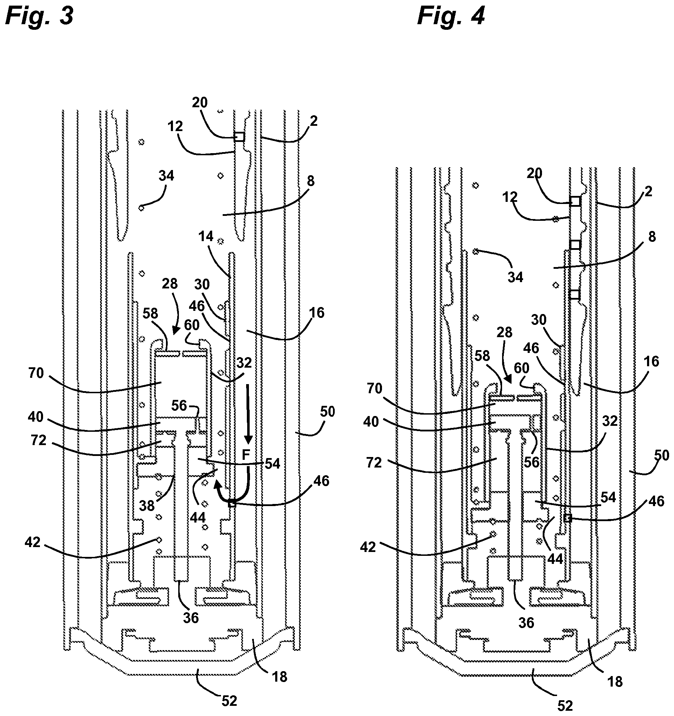

Les figures 3 et 4 présentent une enveloppe tubulaire extérieure 50 disposée autour du corps extérieur 2, se terminant en bas par un couvercle 52.

Un boisseau 28 comportant une partie intérieure 32 réalisée avec une tôle d'épaisseur mince, forme un cylindre fermé en dessous par une base 54, présentant en haut une grande ouverture comprenant un rebord interne 60 tourné vers l'axe.

Une tige 36 ne traversant pas l'ensemble du boisseau 28, présente une extrémité inférieure fixée au couvercle d'extrémité 18, et une partie centrale traversant la base 54 avec un guidage axial étanche 38. La tige 36 traverse ensuite la deuxième chambre de temporisation 72, son extrémité supérieure recevant le piston de boisseau 40 coulissant dans l'alésage de la partie intérieure 32.

Le piston de boisseau 40 comporte un perçage calibré 56 de limitation du passage de fluide. Le haut de la première chambre 70 est fermé par un clapet 58 formant une rondelle en appui sous le rebord interne 60, présentant un perçage central calibré de limitation du passage de fluide.

Quand la pression dans la chambre d'amortissement 8 est supérieure à celle dans la première chambre 70, le clapet 58 descend en décollant du rebord interne 60, et permet un passage rapide de fluide vers cette première chambre. Quand la pression dans la première chambre 70 est supérieure à celle dans la chambre d'amortissement 8, le clapet 58 est en appui sous le rebord interne 60 avec un passage limité de fluide par son perçage central.

Le ressort de poussée 34 est engagé dans un creux axial entre la partie extérieure 30 et la partie intérieure 32 du boisseau 28, descendant jusqu'à la base 54 afin d'être guidé en descendant bas à l'intérieur du boisseau pour donner un espace axial suffisant à ce ressort quand le piston principal est en bout de course.

Le ressort de rappel 42 est disposé en dessous de la base 54, en prenant appui sur le couvercle d'extrémité 18 pour appliquer une force vers le haut en permanence sur le boisseau 28.

La figure 3 présente le ressort de poussée 34 appliquant pas de charge ou une charge peu fréquente sur le boisseau 28. Le ressort de rappel 42 est détendu, le boisseau 28 étant dans sa position haute.

Une descente du boisseau 28 nécessite un transfert de fluide de la première chambre 70 vers la deuxième chambre de temporisation 72, qui est freiné d'une part par le perçage calibré 56 du piston de boisseau 40, et d'autre part par une sortie du fluide excédentaire de cette première chambre par le perçage calibré du clapet 58, vers la chambre d'amortissement 8 à cause de la tige 36 rentrant dans cette chambre de temporisation.

Un appui peu fréquent du ressort de poussée 34 sur le boisseau 28 n'agit pas sur ce boisseau. Un appui fréquent du ressort de poussée 34 sur le boisseau 28 finit par effectuer ces transferts de fluide, ce qui permet au boisseau de descendre comme présenté figure 4.

Après un déchargement du véhicule le ressort de poussée 34 agit peu ou plus sur le boisseau 28. Le ressort de rappel 42 remonte le boisseau 28 avec une vidange de la deuxième chambre de temporisation 72 par le perçage calibré du piston de boisseau 40, et une contribution rapide au remplissage de la première chambre 70 par le clapet 58 qui descend en s'ouvrant franchement.

La remontée du boisseau 28 peut être plus rapide que sa descente grâce aux deux chambres intérieures 70, 72 de ce boisseau, qui permettent une large possibilité de réglage en ajustant le calibrage des perçages du piston de boisseau 40 et du clapet 58.

On réalise ainsi de manière simple et économique, avec peu de modifications d'un amortisseur hydraulique existant, une butée de fin de course progressive et autoréglable qui s'adapte automatiquement à la charge du véhicule.

D'une manière générale la butée de fin de course peut comporter uniquement des perçages principaux sur le tube de butée 14, la chemise 12 ne comprenant pas de perçage, ou une combinaison de perçages de ce tube et de la chemise. Le nombre, la dimension et la répartition de ces perçages et facilement ajustable.

On notera que l'amortisseur télescopique comportant la butée hydraulique selon l'invention, peut être disposé dans le véhicule automobile suivant toutes les directions. La tige d'amortisseur 6 peut être reliée à la caisse du véhicule ou inversement à un élément de suspension.

## Revendications

1. Amortisseur hydraulique télescopique avec butée de fin de course, coulissant suivant un axe principal, comportant un piston d'amortissement (4) avançant vers une direction avant lors d'un mouvement de compression de l'amortisseur, qui délimite en avant de ce piston d'amortissement (4) une chambre d'amortissement (8), une chemise (12) fixée en avant du piston d'amortissement (4), s'emboîtant sans jeu en fin de course autour d'un tube de butée (14) en fermant des premiers perçages (20) de la chemise (12) ou du tube de butée (14), la butée comportant un boisseau (28) coulissant axialement dans le tube de butée (14) pour fermer des seconds perçages (46) de ce tube de butée (14), et comportant un ressort de poussée (34) disposé entre le piston d'amortissement (4) et le boisseau (28), **caractérisé en ce que** le boisseau (28) présente un alésage axial contenant un piston de boisseau (40) délimitant en arrière une première chambre (70) qui est séparée de la chambre d'amortissement (8), et en avant une deuxième chambre (72) temporisant le mouvement du boisseau (28).

2. Amortisseur hydraulique selon la revendication 1, **caractérisé en ce qu'**il comporte un ressort de rappel (42) qui applique une force constante vers l'arrière sur le boisseau (28).

3. Amortisseur hydraulique selon la revendication 1 ou 2, **caractérisé en ce que** le piston de boisseau (40) comporte un perçage (56) de limitation du passage de fluide.

4. Amortisseur hydraulique selon la revendication 3, **caractérisé en ce que** le piston de boisseau (40) est fixé sur une tige axiale (36) qui traverse les deux chambres du boisseau (70, 72).

5. Amortisseur hydraulique selon la revendication 4, **caractérisé en ce qu'**aux extrémités axiales opposées des chambres du boisseau (70, 72), la tige axiale (36) traverse le boisseau (28) par des guidages étanches (38).

6. Amortisseur hydraulique selon l'une quelconque des revendications 1 à 3, **caractérisé en ce que** le piston de boisseau (40) est fixé à l'extrémité d'une tige axiale (36) traversant la deuxième chambre (72).

7. Amortisseur hydraulique selon la revendication 6, **caractérisé en ce que** l'extrémité axiale arrière de la première chambre (70) est séparée par un clapet (58) de la chambre d'amortissement (8), réalisant une ouverture maximum pour un remplissage de cette première chambre (70).

8. Amortisseur hydraulique selon la revendication 7, **caractérisé en ce que** le clapet (58) comporte un perçage de limitation du passage de fluide.

9. Amortisseur hydraulique selon l'une quelconque des revendications précédentes, **caractérisé en ce que** le ressort de poussée (34) est engagé vers l'avant dans un creux axial du boisseau (28) se prolongeant jusqu'à la deuxième chambre (72).

10. Véhicule automobile équipé de suspensions, **caractérisé en ce que** ces suspensions comportent des amortisseurs selon l'une quelconque des revendications précédentes.

## Patentansprüche

1. Teleskopischer hydraulischer Stoßdämpfer mit Endanschlag, entlang einer Hauptachse verschiebbar, umfassend einen während einer Einfederungsbewegung des Stoßdämpfers nach vorne ausfahrenden Dämpfungskolben (4), der vor diesem Dämpfungskolben (4) eine Dämpfung definiert Kammer (8), eine vor dem Dämpfungskolben (4) befestigte Hülse (12), am Hubende spielfrei um ein Anschlagrohr (14) durch Verschließen der ersten Bohrungen (20) der Hülse (12) oder des Stopfenrohres (14), wobei der Stopfen einen in dem Stopfenrohr (14) axial verschiebbaren Stopfen (28) zum Verschließen zweiter Bohrungen (46) dieses Stopfenrohres (14) und eine Druckfeder (34) umfasst zwischen dem Dämpfungskolben (4) und dem Stopfen (28) angeordnet, **dadurch gekennzeichnet, dass** der Stopfen (28) eine axiale Bohrung aufweist, die einen Stopfenkolben (40) enthält, der hinter einer ersten Kammer (70) definiert, die von der Dämpfungskammer (8) und von vor einer zweiten Kammer (72), die die Bewegung des Ventils (28) verzögert.

2. Hydraulischer Stoßdämpfer nach Anspruch 1, **dadurch gekennzeichnet, dass** er eine Rückstellfeder (42) umfasst, die eine konstante Kraft nach hinten auf das Ventil (28) ausübt.

3. Hydraulischer Stoßdämpfer nach Anspruch 1 oder 2, **dadurch gekennzeichnet, dass** der Ventilkolben (40) eine Bohrung (56) zur Begrenzung des Flüssigkeitsdurchtritts aufweist.

4. Hydraulischer Stoßdämpfer nach Anspruch 3, **dadurch gekennzeichnet, dass** der Ventilkolben (40) an einer Axialstange (36) befestigt ist, die die beiden Kammern des Ventils (70, 72) durchsetzt.

5. Hydraulischer Stoßdämpfer nach Anspruch 4, **dadurch gekennzeichnet, dass** an den gegenüberliegenden axialen Enden der Ventilkammern (70, 72) die axiale Stange (36) das Ventil (28) durch abgedichtete Führungen (38) durchsetzt.

6. Hydraulischer Stoßdämpfer nach einem der Ansprüche 1 bis 3, **dadurch gekennzeichnet, dass** der Steckkolben (40) am Ende einer die zweite Kammer (72) durchsetzenden Axialstange (36) befestigt ist.

7. Hydraulischer Stoßdämpfer nach Anspruch 6, **dadurch gekennzeichnet, dass** das hintere axiale Ende der ersten Kammer (70) durch ein Ventil (58) von der Dämpfungskammer (8) getrennt ist, wodurch eine maximale Öffnung zum Befüllen dieses ersten Schlafzimmers bereitgestellt wird (70).

8. Hydraulischer Stoßdämpfer nach Anspruch 7, **dadurch gekennzeichnet, dass** das Ventil (58) eine Bohrung zur Begrenzung des Flüssigkeitsdurchtritts aufweist.

9. Hydraulischer Stoßdämpfer nach einem der vorhergehenden Ansprüche, **dadurch gekennzeichnet, dass** die Schubfeder (34) nach vorne in eine axiale Vertiefung des Stopfens (28) eingreift, die sich bis zur zweiten Kammer (72) erstreckt.

10. Kraftfahrzeug mit Aufhängungen, **dadurch gekennzeichnet, dass** diese Aufhängungen Stoßdämpfer nach einem der vorhergehenden Ansprüche umfassen.

## Claims

1. Telescopic hydraulic shock absorber with end stop, sliding along a main axis, comprising a damping piston (4) advancing in a forward direction during a compression movement of the shock absorber, which defines in front of this damping piston (4) a damping chamber (8), a sleeve (12) fixed in front of the damping piston (4), fitting without play at the end of the stroke around a stop tube (14) by closing the first bores (20) of the sleeve (12) or of the stopper tube (14), the stopper comprising a plug (28) sliding axially in the stopper tube (14) to close second bores (46) of this stop tube (14), and comprising a thrust spring (34) arranged between the damping piston (4) and the plug (28), **characterized in that** the plug (28) has an axial bore containing a plug piston (40) defining behind a first chamber (70) which is separated from the damping chamber (8), and by before a second chamber (72) delaying the movement of the valve (28).

2. Hydraulic shock absorber according to claim 1, **characterized in that** it comprises a return spring (42) which applies a constant force rearwardly on the valve (28).

3. Hydraulic shock absorber according to claim 1 or 2, **characterized in that** the valve piston (40) has a bore (56) for limiting the passage of fluid.

4. Hydraulic shock absorber according to claim 3, **characterized in that** the valve piston (40) is fixed on an axial rod (36) which passes through the two chambers of the valve (70, 72).

5. Hydraulic shock absorber according to claim 4, **characterized in that** at the opposite axial ends of the valve chambers (70, 72), the axial rod (36) passes through the valve (28) by sealed guides (38).

6. Hydraulic shock absorber according to any one of claims 1 to 3, **characterized in that** the plug piston (40) is fixed to the end of an axial rod (36) passing through the second chamber (72).

7. Hydraulic shock absorber according to claim 6, **characterized in that** the rear axial end of the first chamber (70) is separated by a valve (58) from the damping chamber (8), providing a maximum opening for filling of this first bedroom (70).

8. Hydraulic shock absorber according to claim 7, **characterized in that** the valve (58) comprises a bore for limiting the passage of fluid.

9. Hydraulic shock absorber according to any one of the preceding claims, **characterized in that** the thrust spring (34) is engaged forwards in an axial hollow of the plug (28) extending to the second chamber (72).

10. Motor vehicle equipped with suspensions, **characterized in that** these suspensions comprise shock absorbers according to any one of the preceding claims.
